# EUROPÄISCHE PATENTSCHRIFT

(11) **EP 1 799 731 B1**
(45) Veröffentlichungstag und Bekanntmachung des Hinweises auf die Patenterteilung: **31.01.2018**
(21) Anmeldenummer: 05796007.2
(22) Anmeldetag: 14.10.2005
(51) Int. Cl.: C04B 24/32, C04B 24/30, C04B 24/24, C04B 103/30, C08G 8/28, C08G 65/48, C08G 12/40

(54) **POLYKONDENSATIONSPRODUKT AUF BASIS VON AROMATISCHEN ODER HETEROAROMATISCHEN VERBINDUNGEN, VERFAHREN ZU SEINER HERSTELLUNG UND DESSEN VERWENDUNG**
POLYCONDENSATION PRODUCT BASED ON AROMATIC OR HETEROAROMATIC COMPOUNDS, METHOD FOR THE PRODUCTION THEREOF, AND USE THEREOF
PRODUIT DE POLYCONDENSATION A BASE DE COMPOSES AROMATIQUES OU HETEROAROMATIQUES, PROCEDE DE PRODUCTION ET UTILISATION DE CE PRODUIT

(30) Priorität: 15.10.2004 DE 102004050395
(43) Veröffentlichungstag der Anmeldung: 27.06.2007
(73) Patentinhaber: Construction Research & Technology GmbH, 83308 Trostberg (DE)
(72) Erfinder: WIELAND, Philipp, 80935 München (DE); KRAUS, Alexander, 83552 Evenhauser (DE); ALBRECHT, Gerhard, 83342 Tacherting (DE); BECHER, Kerstin, 83530 Waldhausen (DE); GRASSL, Harald, 83471 Schönau (DE)
(74) Vertreter: Weickmann & Weickmann PartmbB
(86) Internationale Anmeldenummer: PCT/EP2005/011082
(87) Internationale Veröffentlichungsnummer: WO 2006/042709

(56) Entgegenhaltungen:
- EP-A- 0 003 798
- EP-A- 0 025 143
- EP-A- 0 075 166
- EP-A- 0 389 082
- EP-A- 0 780 348
- WO-A-02/40563
- PATENT ABSTRACTS OF JAPAN Bd. 1995, Nr. 01, 28. Februar 1995 (1995-02-28) & JP 06 293542 A (KAO CORP), 21. Oktober 1994 (1994-10-21)

## Beschreibung

Die vorliegende Erfindung betrifft ein Polykondensationsprodukt auf Basis von aromatischen oder heteroaromatischen Verbindungen, Verfahren zu seiner Herstellung sowie dessen Verwendung als Zusatzmittel für wässrige Suspensionen von anorganischen Bindemitteln wie Zementleim, Mörtel oder Beton. Die Verwendung dieser Polymere führt zu einer deutlichen Verbesserung der Fließfähigkeit der Zusammensetzung während des Hydratationsprozesses.

In wässrigen Suspensionen von pulverförmigen anorganischen oder organischen Substanzen, wie hydraulischen Bindemitteln (z.B. Zement, Kalk, Gips oder Anhydrit), Gesteinsmehl, Silikatmehl, Kreide, Tonen, Porzellanschlicker, Talkum, Pigmenten, Ruß oder Kunststoffpulvern, werden oft Zusatzmittel in Form von Dispergiermitteln zugesetzt, um ihre Verarbeitbarkeit, d.h. Knetbarkeit, Fließfähigkeit, Spritzbarkeit, Streichfähigkeit oder Pumpbarkeit zu verbessern. Diese Zusatzmittel sind in der Lage, durch Adsorption an die Oberfläche der Teilchen Agglomerate aufzubrechen und die gebildeten Teilchen zu dispergieren. Dies führt insbesondere bei hochkonzentrierten Dispersionen zu einer deutlichen Verbesserung der Verarbeitbarkeit.

Bei der Herstellung von Baustoffmischungen, die hydraulische Bindemittel wie Zement, Kalk, Gips oder Anhydrit enthalten, lässt sich dieser Effekt besonders vorteilhaft nutzen, da zur Erzielung einer gut verarbeitbaren Konsistenz ansonsten wesentlich mehr Wasser benötigt würde, als für den nachfolgenden Hydratationsprozess erforderlich wäre. Durch das nach dem Erhärten allmählich verdunstende Wasser bleiben Hohlräume zurück, welche die mechanischen Festigkeiten und Beständigkeiten der Baukörper signifikant verschlechtern.

Um den im Sinne der Hydratation überschüssigen Wasseranteil zu reduzieren und/oder die Verarbeitbarkeit bei einem vorgegebenen Wasser/Bindemittel-Verhältnis zu optimieren, werden Zusatzmittel eingesetzt, die im allgemeinen als Wasserreduktions- oder Fließmittel bezeichnet werden.

Beispiele für bisher hauptsächlich verwendete Zement-Dispergiermittel, bzw. Fließmittel sind Salze von Naphthalinsulfonsäure/Formaldehyd-Kondensaten (vgl. EP-A 214 412, im Folgen als Naphthalinsulfonate bezeichnet), Salze von Melaminsulfonsäure/Formaldehyd-Kondensaten (vgl. DE-PS 16 71 017, im Folgenden als Melaminsulfonate bezeichnet), sowie Salze von Polycarbonsäuren (vgl. US 5,707,445 B1, EP 1 110 981 A2, EP 1 142 847 A2, im Folgenden als Polycarboxylate bezeichnet). Solche Polycarboxylate werden meist durch radikalische Copolymerisation von ethylenisch ungesättigten Carbonsäuren (wie z.B. Acrylsäure, Methacrylsäure oder Maleinsäure bzw. deren Salze) und Poly(alkylenoxiden) mit einer polymerisierbaren Endgruppe (wie z.B. Methacrylate, Allylether oder Vinylether) hergestellt. Diese Herstellungsweise führt zu Polymeren mit einer kammartigen Struktur.

Jedes der genannten Dispergiermittel hat spezifische Vorteile, gleichwohl aber auch individuelle Nachteile. So zeigen etwa Polycarboxylate eine deutliche Verzögerung der Erstarrungszeiten des Betons bei gleichzeitig exzellenter Verflüssigungswirkung. Auf der anderen Seite zeigen Naphthalinsulfonate und Melaminsulfonate eine gute Verflüssigung und die Festigkeitsentwicklung wird durch den Zusatz dieser Stoffe kaum beeinträchtigt. Jedoch weisen diese Verflüssiger das Problem des sog. "slump loss" auf, d.h. dass die verflüssigende Wirkung selbst bei vergleichsweise hohen Dosierungen nur über eine relativ kurze Zeitspanne bestehen bleibt. Dies führt insbesondere dann zu Problemen, wenn zwischen der Herstellung des Betons und dessen Einbau größere Zeitspannen liegen, wie sie sich oft durch lange Transport- oder Förderwege ergeben.

Aus verschiedenen Studien über den Wirkungsmechanismus von Fließmitteln ist bekannt, dass die Wirksamkeit der verwendeten Moleküle auf zwei unterschiedlichen Effekten beruht. Zum einen adsorbieren die negativ geladenen Säuregruppen der Fließmittel auf der durch Calciumionen positiv geladenen Zementkornoberfläche. Die so entstehende elektrostatische Doppelschicht (Zeta Potential) führt zu einer elektrostatischen Abstoßung zwischen den Partikeln, die jedoch relativ schwach ist. Im Fall der oben erwähnten Kammpolymere wird diese elektrostatische Abstoßung durch den sterischen Anspruch der wasserlöslichen, nicht adsorbierenden Poly (alkylenoxid)e zusätzlich verstärkt. Diese sterische Abstoßung ist sehr viel stärker, als die elektrostatische, so dass leicht zu erklären ist, warum die Verflüssigungswirkung der Polycarboxylate sehr viel stärker ist, als die der Naphthalin- oder Melaminsulfonate, d.h. um eine vergleichbare Verflüssigung zu erzielen, kann das Polycarboxylat deutlich niedriger dosiert werden.

Ein Nachteil der Polycarboxylate ist, dass für deren Herstellung Poly (alkylenoxid)e nötig sind, die in einem extra Reaktionsschritt mit einer polymerisierbaren Gruppe funktionalisiert werden müssen. Der Preis der Herstellung dieser Verflüssiger liegt aus diesem Grund weit über dem von Naphthalin- oder Melaminsulfonaten, womit der immer noch sehr hohe Verbrauch solcher Verflüssiger zu erklären ist.

Ein Polykondensationsprodukt, das neben Säure-Haftgruppen auch nicht adsorbierende Seitenketten enthält, wird in US 5,750,634 beschrieben, wobei die Seitenketten durch eine Copolykondensation von Melaminsulfonsäuren, Formaldehyd und Aminogruppen- haltigen Polyalkylenoxiden in das Produkt eingebaut werden. Der Nachteil dieses Verfahrens ist jedoch einerseits der hohe Preis aminofunktionalisierter Polyalkylenoxide, andererseits werden bei diesem Verfahren keine hohen Polymerisationsgrade erzielt, was die Wirksamkeit der erhaltenen Polymere im Vergleich zu den oben genannten Polycarboxylaten negativ beeinflusst. Ein weiteres Beispiel für ein solches Polykondensationsprodukt mit nicht adsorbierenden Seitenketten wird in EP 0 780 348 A1 beschrieben. Darin wird ethoxyliertes Phenol mit Hydroxybenzoesäuren in Gegenwart von Formaldehyd einer Polykondensation unterworfen. Die dort beschriebenen Reaktionszeiten von 10 bis 12 h sind jedoch für eine ökonomisch sinnvolle technische Realisierung wenig geeignet. Außerdem sind Hydroxybenzoesäuren relativ teuer und aufgrund ihrer pulverförmigen Konsistenz im technischen Maßstab wesentlich schlechter zu dosieren als beispielsweise Flüssigkeiten.

JP 06 293542 beschreibt einen Betonzusatzstoff auf Basis eines Formaldehyd-Copolymerisats in Kombination mit einem wasserlöslichen Polymer. Das Formaldehyd-Copolymerisat wir aus einem Phenylglycol, Formaldehyd und einem mit Formaldehyd copolymerisierbaren Monomer erhalten, wobei dieses Monomer unter anderem ein Melaminderivat sein kann. Oxyalkylengruppen sind an keinem der copolymerisierbaren Monomere vorhanden.

Der vorliegenden Erfindung lag die Aufgabe zugrunde, ein neues Polykondensationsprodukt bereitzustellen, welches die oben genannten Nachteile nicht aufweist. Es sollte sowohl nicht adsorbierende Seitenketten als auch adsorbierende Haftgruppen enthalten und dadurch eine mit kammartigen Polycarboxylaten vergleichbare Verflüssigung der Dispersion bewirken und diesen Effekt über einen längeren Zeitraum aufrecht erhalten ("slump Erhalt"). Außerdem sollte bei der Synthese des neuen Polykondensationsproduktes die Verwendung von teueren, schlecht im technischen Maßstab zu dosierenden Komponenten vermieden werden, um so ein leicht zu synthetisierendes, preisgünstiges, bereits bei geringen Dosierungen hochwirksames Fließmittel zur Verfügung zu stellen.

Diese Aufgabe wurde gelöst durch die Bereitstellung eines Polykondensationsproduktes entsprechend Anspruch 1.

Überraschenderweise wurde gefunden, dass das erfindungsgemäße Polykondensationsprodukt eine sehr gute Verflüssigung hydraulischer Bindemittel wie z.B. Zement bewirkt. Es führt gegenüber Naphthalinsulfonaten oder Melaminsulfonaten zu einer wesentlich besseren Verflüssigung des Baustoffes bei gleichzeitig geringerer Dosierung, wobei die Fließfähigkeit über einen längeren Zeitpunkt aufrecht erhalten werden kann.

Das Polykondensationsprodukt entsprechend der vorliegenden Erfindung besteht also aus drei Komponenten A, B) und C. Die Komponente A) ist eine aromatische oder heteroaromatische Verbindung mit 5 bis 10 C-Atomen, wobei in heteroaromatischen Verbindungen einige der C-Atome, bevorzugt 1 bis 5, insbesondere 1 bis 3, und noch mehr bevorzugt 1 oder 2 der C-Atome durch Heteroatome ersetzt sein können. Geeignete Heteroatome sind z.B. O, N, S oder/und P. Diese Verbindung enthält im Durchschnitt einen oder mehrere, bevorzugt einen Rest, der die 2 bis 280 Reste aus der Gruppe Oxyethylen [-CH₂-CH₂-O-] und Oxypropylen [-CH(CH₃)-CH₂-O- und/oder (-CH₂-CH(CH₃)-O-)] pro Molekül aufweist/aufweisen, der/ die über ein O- oder N-Atom mit der aromatischen oder heteroaromatischen Verbindung verknüpft ist/sind. Ein solcher Rest kann eine einheitliche Verbindung sein, wird aber zweckmäßig eine Mischung aus Komponenten sein, deren Anzahl an Oxyalkylengruppen aus zwei oder drei Kohlenstoffatomen (d.h. Oxyethylen und/oder Oxypropylen) unterschiedlich ist, wobei die chemische Struktur der Einheit am Ende der Oxyalkylen-Gruppen im allgemeinen gleich ist und in manchen Fällen auch eine Mischung aus chemisch unterschiedlichen aromatischen Verbindungen zum Einsatz kommen kann. Die durchschnittliche Anzahl an Oxyalkylen-Gruppen bestehend aus zwei oder drei Kohlenstoffatomen pro Molekül, die in den Komponenten, die eine solche Mischung ergeben, enthalten sind, ist 2 bis 280 und besonders bevorzugt 10 bis 200. Bevorzugt sind auch Verbindungen mit mindestens 3, insbesondere mindestens 4, bevorzugt mindestens 5 und am meisten bevorzugt mindestens 20 Oxyalkylen-Gruppen.

Gemäß einer bevorzugten Ausführungsform werden als aromatische oder heteroaromatische Verbindungen A) Phenol-, Naphthol-, Anilin- oder Furfurylalkohol-Derivate eingesetzt. Es ist im Rahmen der vorliegenden Erfindung möglich, dass die Komponente A) Substituenten ausgewählt aus der Gruppe OH, OR¹, NH2, NHR¹, NR¹₂, C₁-C₁₀-Alkyl, SO₃H, COOH, PO₃H₂, OPO₃H₂ aufweist, wobei die C₁-C₁₀-Alkylreste wiederum Phenyl- oder 4-Hydroxyphenyl-Reste besitzen können und R¹ einen C₁-C₄ Alkylrest bedeutet. Konkrete Beispiele für die Komponente A) sind die Addukte von 1 mol Phenol, Kresol, Resorcinol, Nonylphenol, Methoxyphenol, Naphthol, Methylnaphthol, Butylnaphthol, Bisphenol A, Anilin, Methylanilin, Hydroxyanilin, Methoxyanilin, Furfurylalkohol oder/und Salicylsäure mit 1 bis 300 mol eines Oxyethylen- und/oder Oxypropylen-Restes. Unter dem Gesichtspunkt einer leicht zu erfolgenden Kondensation mit Formaldehyd ist die Komponente A) bevorzugt ein Addukt eines Benzol-Derivates, z.B. Phenol, welches eine C₁-C₁₀-Alkylgruppe aufweisen kann, besonders bevorzugt von Phenol mit einem Alkylenoxid. Die aromatische Ausgangskomponente für A) kann in einigen Fällen bereits eine oder mehrere Oxyalkylengruppen mit zwei oder drei Kohlenstoffatomen enthalten, wobei in einem solchen Fall die Summe der Oxyalkylengruppen, sowohl der Ausgangssubstanz als auch der durch eine Additionsreaktion hinzugefügten Oxyalkylengruppen von 2 bis 280 pro Molekül reicht.

Substanzen, mit denen eine Poly(oxyalkylen)gruppe in die aromatische Ausgangskomponente für A) eingeführt werden kann, sind Ethylenoxid und Propylenoxid. Die Addition kann entweder in statistischer Reihenfolge oder in Form einer Blockstruktur erfolgen. Die terminale Einheit der Poly (oxyalkylen)gruppe von Komponente A) ist dabei nicht beschränkt auf eine Hydroxylgruppe; sie kann vielmehr auch aus einem Alkylether oder einem Carboxylsäureester bestehen, solange diese Gruppe die Kondensation mit Formaldehyd oder der Aldehyd-Säure Komponente nicht behindert.

Die Komponente B) ist mindestens eine aromatische Verbindung ausgewählt aus der Gruppe Phenolether, Naphthole, Naphtholether, Aniline, Furfurylalkohole und/oder eines Aminoplastbildners ausgewählt aus Carbonsäureamiden, wobei die aromatische Verbindung B) Substituenten ausgewählt aus der Gruppe OH, NH₂, OR², NHR², NR²R², C₁-C₄-Alkyl, PO₃H₂, OPO₃H₂ aufweisen kann, wobei die Alkylreste wiederum Phenyl- oder 4-Hydroxyphenylreste besitzen können und R² einen C₁C₄-Alkylrest bedeutet, der seinerseits einen Substituenten ausgewählt aus der Gruppe OH, PO₃H₂, OPO₃H₂ aufweisen kann. Beispiele hierfür sind Phenoxyethanol, Phenoxyethanolphosphat (als Mono-, Di- oder Triester oder als eine beliebige Mischung davon), Methoxyphenol, Anilin, Methylanilin, Bernsteinsäuremonoamid und Furfuryalkohol.

Die dritte Komponente C) ist Formaldehyd.

Formaldehyd wird bevorzugt in Form von wässrigen Lösungen eingesetzt, was die Dosierung bzw. Mischung der Komponenten in einer technisch durchgeführten Synthese erheblich vereinfacht; es ist aber auch der Einsatz der kristallinen, bzw. pulverförmigen Reinsubstanzen, bzw. deren Hydrate möglich.

Das Molverhältnis der Komponenten A), B) und C) kann in weiten Grenzen variiert werden, doch hat es sich als besonders vorteilhaft erwiesen, dass das Molverhältnis von Komponente C) : A) + B) auf 1 : 0,01 bis 10, insbesondere 1 : 0,1 bis 8 und das Molverhältnis der Komponente A) : B) auf 10 : 1 bis 1 : 10 eingestellt wird.

Das erfindungsgemäße Kondensationsprodukt wird dadurch hergestellt, dass man die Komponenten A), B) und C) in wässriger Lösung in Gegenwart eines dehydratisierend wirkenden Katalysators bei einer Temperatur von 20 bis 140 °C und einem Druck von 1 bis 10 bar kondensiert.

Als Katalysatoren werden dabei Mineralsäuren wie Salzsäure, Phosphorsäure, Schwefelsäure oder andere starke Mineralsäuren verwendet. Besonders bevorzugt eingesetzt wird Schwefelsäure, wobei die Verwendung nicht auf den Einsatz der genannten Säuren beschränkt ist.

Gemäß einer bevorzugten Ausführungsform erfolgt die Herstellung des erfindungsgemäßen Polykondensationsproduktes in einem zweistufigen Verfahren, wobei man
a) die Komponente B) und eine wässrige Lösung der Aldehyd-Komponente C) bei einer Temperatur von 20 bis 95 °C für einen Zeitraum von 0,1 bis 10 h vorkondensiert
   und
b) dann die Komponente A) sowie eine wässrige Lösung der Aldehyd-Komponente C) zugibt und in Gegenwart des Katalysators bei einer Temperatur von 20 bis 140 °C für einen Zeitraum von 0,1 bis 24 h fertigkondensiert.

Der bevorzugte Temperaturbereich in der Stufe a) beträgt 40 bis 90 °C und in der Stufe b) 60 bis 130 °C. Das Verhältnis der Gesamtmenge an zugesetzter Aldehyd-Komponente zur Summe der Monomere A) und B) beträgt 1 : 0,01 - 10, bevorzugt 1 : 0,1 - 8 und besonders bevorzugt 1 : 0,2 - 5. Der Fortschritt der Polykondensation ist durch eine deutliche Zunahme der Viskosität gekennzeichnet. Wenn die gewünschte Viskosität erreicht ist, wird die Polykondensation durch Abkühlen und Zugabe einer basischen Verbindung abgebrochen. Die Neutralisation des Polykondensationsproduktes und des Katalysators erfolgt mit den üblichen alkalisch reagierenden Verbindungen oder Salzen, insbesondere Hydroxiden. Vorzugsweise wird zur Neutralisation Natriumhydroxid verwendet.

Gemäß einer bevorzugten Ausführungsform wird die Reaktionslösung nach Beendigung der Polykondensationsreaktion einer thermischen Nachbehandlung bei einem pH-Wert von 8,0 bis 13,0 und einer Temperatur von 60 bis 120 °C unterworfen. Durch diese thermischen Nachbehandlung, die in der Regel 10 Minuten bis 3 Stunden dauert, ist es möglich, den Formaldehyd-Gehalt in der Reaktionslösung deutlich zu erniedrigen. Neben der eben beschriebenen Entfernung freien Formaldehyds durch die sog. Canizzarro-Reaktion können natürlich auch alle anderen bekannten Methoden zur Reduzierung überschlüssigen Formaldehyds verwendet werden, wie sie beispielsweise aus der Chemie der Melamin- und Phenol-Formaldehyd-Harze bekannt sind. Ein Beispiel ist die Zugabe geringer Mengen Natriumbisulfits als Formaldehydfänger.

Es ist im Rahmen der vorliegenden Erfindung des Weiteren noch möglich, das bei der Neutralisation mit Natriumhydroxid gebildete Natriumsulfat nach Abschluss der Polykondensationsreaktion abzutrennen, wobei auf verschiedene Möglichkeiten zurückgegriffen werden kann.

Es hat sich hierbei als besonders vorteilhaft erwiesen, die Reaktionslösung auf einen pH-Wert von 1,0 bis 4,0, insbesondere 1,5 bis 2,0, einzustellen, wobei das Polykondensationsprodukt als Feststoff ausfällt und sich am Boden des Reaktionsgefäßes absetzt. Die überstehende wässrige Salz-Lösung kann dann abgetrennt werden und das zurückgebliebene weitgehend salzfreie Polykondensationsprodukt wieder in soviel Wasser aufgenommen werden, dass die gewünschte Feststoffkonzentration eingestellt wird. Eine Alternative dazu wäre, die Neutralisationsreaktion mit Calciumhydroxid-Lösung durchzuführen, wobei das hierbei gebildete Calciumsulfat in Form von Gips aus der Lösung ausfällt und so mittels Filtration abgetrennt werden kann. Anstelle von Calciumsulfat kann die Neutralisation auch mit Ba(OH)2 durchgeführt werden. In diesem Fall wird mit der freien Schwefelsäure schwer lösliches Bariumsulfat gebildet, welches anschließend abfiltriert werden kann, um salzfreie Polymere zu erhalten. Darüber hinaus besteht auch die Möglichkeit, das unerwünschte Natriumsulfat durch Dialyse bzw. Ultrafiltration abzutrennen. Eine weitere, wenn auch technisch schwierig zu realisierende Möglichkeit besteht darin, die wässrige mit Natriumhydroxid neutralisierte Lösung in ein mit Wasser mischbares organisches Lösemittel (Methanol, Aceton) einzutragen, das ausgefallene Natriumsulfat abzufiltrieren und die Lösung, welche das Polykondensation enthält, einzuengen und anschließend wieder in Wasser aufzunehmen.

Das durch Kondensation der oben beschriebenen Komponenten erhaltene Polykondensationsprodukt kann in dem Zustand als Fließmittel eingesetzt werden, in dem es bei der Kondensation erhalten wird, d.h. in Form der freien Säure. Unter den Gesichtspunkten wie Lagerung und Verwendung des Polymers wird jedoch das Salz, welches durch Neutralisation des Polykondensationsproduktes erhalten wird, bevorzugt. Beispiele für das neutralisierte Salz der Polykondensationsprodukte sind die Alkalimetallsalze, z.B. Natrium- oder Kaliumsalze, Erdalkalimetallsalze, z.B. Kalziumsalze, sowie Ammoniumsalze oder Salze organischer Amine.

Die erfindungsgemäßen Polykondensationsprodukte eignen sich hervorragend als Zusatzmittel für wässrige Suspensionen auf Basis von anorganischen Bindemitteln, insbesondere Zement sowie Kalk und Gips, wobei sie in einer Menge von 0,01 bis 10 Gew.-%, vorzugsweise 0,05 bis 5 Gew.-% bezogen auf das Gewicht des anorganischen Bindemittels eingesetzt werden. Im Vergleich zu den bisher bekannten Zusatzmitteln auf Basis von Polykondensationsprodukten mit Formaldehyd verleihen die erfindungsgemäßen Polykondensationsprodukte den damit hergestellten Baustoffmischungen eine wesentlich bessere Verarbeitbarkeit bei gleichzeitig deutlich geringerer Dosierung.

Durch die gezielte Auswahl geeigneter Alkali- oder Erdalkali-Metallhydroxide können über Neutralisationsvorgänge Salze der erfindungsgemäßen Polykondensationsprodukte hergestellt werden, mit denen die Dauer der Verarbeitbarkeit wässriger Suspensionen von anorganischen Bindemitteln und insbesondere von Beton beeinflusst werden kann. Wird bespielsweise das erfindungsgemäße Polykondensationsprodukt in Form eines Phosphathaltigen Phenolharzes statt wie beschrieben mit Natriumhydroxid mit Calciumhydroxid neutralisiert, so verändert sich der Verlauf der Slump-Entwicklung über die Zeit. Während im Falle des Natriumsalzes eine Verringerung der Verarbeitbarkeit über die Zeit zu beobachten ist, so findet im Fall des Calciumsalzes des identischen Polymers eine komplette Umkehrung dieses Verhaltens statt: Zu Beginn tritt eine geringe Wasserreduktion auf (geringer Slump), wohingegen dieser Slump mit zunehmender Zeit zunimmt. Kaliumsalze und Bariumsalze verhalten sich dabei analog zum Natriumsalz. D.h. im Laufe der Zeit nimmt die Verarbeitbarkeit der Bindemittel-haltigen Masse, wie z.B. Beton oder Mörtel, ab; im Falle der Calciumsalze nimmt jedoch der Slump mit der Zeit sehr stark zu.

Die nachfolgenden Beispiele sollen diese Erfindung näher erläutern.

### Beispiele

### A. Herstellung von Phenoxyethanolphosphat

1 mol Phenoxyethanol wird in Gegenwart von 1,1 mol H₃PO₃ in Xylol am Wasserabscheider azeotrop verestert. Das beim Abkühlen ausgefallene Reaktionsprodukt wird abfiltriert, mit Petrolether gewaschen und zu einem weißen Pulver getrocknet. Die bei dieser Reaktion neben Phenoxyethanolphosphat (Phenoxyethanol-dihydrogenphosphat) gegebenenfalls entstandene Menge des Phosphorsäurediesters (2-Phenoxyethanol-hydrogensulfat, 0-50 %) stört die anschließend stattfindende Polykondensation nicht, es wird in das Polykondensat mit eingebaut.
Nach dieser Methode können auch alle anderen in den Patentansprüchen genannten Phosphate aus den entsprechenden Hydroxyverbindungen hergestellt werden.
Neben der azeotropen Veresterung mit Orthophosphorsäure können zur Darstellung der gewünschten Phosphorsäureester auch alle anderen bekannten Methoden zur Synthese von Phosphorsäureestern zum Einsatz kommen.

### B. Herstellung der erfindungsgemäßen Polykondensate

### Beispiel B.1

1 mol Poly(ethylenoxid)-monophenylether (1000 g/mol), 2 mol Phenoxyethanolphosphat (bzw. eine Mischung aus 2-Phenoxyethanol-dihydrogenphosphat und 2-Phenoxyethanol-hydrogenphosphat), 16,3 mol Wasser und 2 mol H₂SO₄ werden unter Rühren vorgelegt. Zu der so entstandenen Lösung werden 3 mol Formaldehyd in Form einer 37 %-igen wässrigen Lösung zugetropft. Die Polykondensationsreaktion wird bei 105 ° C über einen Zeitraum von 5 h vervollständigt. Nach Beendigung der Reaktion wird der Reaktionsansatz mit 20 %-iger wässriger NaOH-Lösung auf einen pH von 10,5 gebracht. Nach weiteren 30 min bei 105 °C wird der Ansatz auf Raumtemperatur abgekühlt und der Feststoffgehalt durch Zugabe von Wasser auf ca. 30 Gew.-% eingestellt.
Als Molmasse des so erhaltenen Polykondensationsproduktes wird mit Hilfe der Gelpermeationschromatographie ein Wert von 22.000 g/mol erhalten.

### Beispiel B.2

1 mol Poly(ethylenoxid)-monophenylether (2000 g/mol), 2 mol Phenoxyethanolphosphat (bzw. eine Mischung aus 2-Phenoxyethanol-dihydrogenphosphat und 2-Phenoxyethanol-hydrogenphosphat), 16,3 mol Wasser und 2 mol H₂SO₄ werden unter Rühren vorgelegt. Zu der so entstandenen Lösung werden 3 mol Formaldehyd in Form einer 37 %-igen wässrigen Lösung zugetropft. Die Polykondensationsreaktion wird bei 105 ° C über einen Zeitraum von 5 h vervollständigt. Nach Beendigung der Reaktion wird der Reaktionsansatz mit 20 %-iger wässriger NaOH-Lösung auf einen pH von 10,5 gebracht. Nach weiteren 30 min bei 105 °C wird der Ansatz auf Raumtemperatur abgekühlt und der Feststoffgehalt durch Zugabe von Wasser auf ca. 30 Gew.-% eingestellt.
Als Molmasse des so erhaltenen Polykondensationsproduktes wird mit Hilfe der Gelpermeationschromatographie ein Wert von 20.000 g/mol erhalten.

### Beispiel B.3

1 mol Poly(ethylenoxid)-monophenylether (1000 g/mol), 2 mol Phenoxyethanolphosphat (bzw. eine Mischung aus 2-Phenoxyethanol-dihydrogenphosphat und 2-Phenoxyethanol-hydrogenphosphat), 0,5 mol Phenol, 8,1 mol Wasser und 1 mol H₂SO₄ werden unter Rühren vorgelegt. Zu der so entstandenen Lösung werden 3 mol Formaldehyd in Form einer 37 %-igen wässrigen Lösung zugetropft. Die Polykondensationsreaktion wird bei 105 °C über einen Zeitraum von 5 h vervollständigt. Nach Beendigung der Reaktion wird der Reaktionsansatz mit 20 %-iger wässriger NaOH-Lösung auf einen pH von 10,5 gebracht. Nach weiteren 30 min bei 105 °C wird der Ansatz auf Raumtemperatur abgekühlt und der Feststoffgehalt durch Zugabe von Wasser auf ca. 30 Gew.-% eingestellt. Als Molmasse des so erhaltenen Polykondensationsproduktes wird mit Hilfe der Gelpermeationschromatographie ein Wert von 20.000 g/mol erhalten.

### Beispiel B.4

1 mol Poly(ethylenoxid)-monophenylether (1000 g/mol), 2 mol Phenoxyethanolphosphat (bzw. eine Mischung aus 2-Phenoxyethanol-dihydrogenphosphat und 2-Phenoxyethanol-hydrogenphosphat), 1 mol Phenoxyethanol, 16,3 mol Wasser und 2 mol H₂SO₄ werden unter Rühren vorgelegt. Zu der so entstandenen Lösung werden 4 mol Formaldehyd in Form einer 37 %-igen wässrigen Lösung zugetropft. Die Polykondensationsreaktion wird bei 105 °C über einen Zeitraum von 5 h vervollständigt. Nach Beendigung der Reaktion wird der Reaktionsansatz mit 20 %-iger wässriger NaOH-Lösung auf einen pH von 10,5 gebracht. Nach weiteren 30 min bei 105 °C wird der Ansatz auf Raumtemperatur abgekühlt und der Feststoffgehalt durch Zugabe von Wasser auf ca. 30 Gew.-% eingestellt.
Als Molmasse des so erhaltenen Polykondensationsproduktes wird mit Hilfe der Gelpermeationschromatographie ein Wert von 21.000 g/mol erhalten.

### Beispiel B.5

1 mol Poly(ethylenoxid)-monophenylether (2000 g/mol), 2 mol Phenoxyethanolphosphat (bzw. eine Mischung aus 2-Phenoxyethanol-dihydrogenphosphat und 2-Phenoxyethanol-hydrogenphosphat), 1 mol Phenol, 16,3 mol Wasser und 2 mol H₂SO₄ werden unter Rühren vorgelegt.

Zu der so entstandenen Lösung werden 3 mol Formaldehyd in Form einer 37 %-igen wässrigen Lösung zugetropft. Die Polykondensationsreaktion wird bei 105 °C über einen Zeitraum von 5 h vervollständigt. Nach Beendigung der Reaktion wird der Reaktionsansatz mit 20 %-iger wässriger NaOH-Lösung auf einen pH von 10,5 gebracht. Nach weiteren 30 min bei 105 °C wird der Ansatz auf Raumtemperatur abgekühlt und der Feststoffgehalt durch Zugabe von Wasser auf ca. 30 Gew.-% eingestellt. Als Molmasse des so erhaltenen Polykondensationsproduktes wird mit Hilfe der Gelpermeationschromatographie ein Wert von 29.000 g/mol erhalten.

### Beispiel B.6 (Vergleichsbeispiel)

2 mol Phenol und 3,3 mol Glyoxylsäure werden vorgelegt und bei 80 °C für 1 h gerührt. Anschließend werden 1 mol Poly(ethylenoxid)-monophenylether (1000 g/mol), 24,3 mol Wasser und 3 mol H₂SO₄ zugegeben. Zu der so entstandenen klaren Lösung werden 1,7 mol Formaldehyd und 1,7 mol Glyoxylsäure getropft. Nach Erhöhen der Temperatur auf 110 °C wird die Polykondensation über einen Zeitraum von 5 h vervollständigt. Nach Beendigung der Reaktion wird der Reaktionsansatz mit 20 %-iger wässriger NaOH-Lösung auf einen pH von 10,5 gebracht. Nach weiteren 30 min bei 110 °C wird der Ansatz auf Raumtemperatur abgekühlt und der Feststoffgehalt durch Zugabe von Wasser auf ca. 30 Gew.-% eingestellt. Als Molmasse des so erhaltenen Polykondensationsproduktes wird mit Hilfe der Gelpermeationschromatographie ein Wert von 22.000 g/mol erhalten.

### Beispiel B.7 (Vergleichsbeispiel)

0,6 mol Phenol, 0,06 mol Formaldehyd und 0,6 mol Glyoxylsäure werden vorgelegt und bei 80 °C für 1 h gerührt. Anschließend werden 0,3 mol Poly (ethylenoxid)-monophenylether (1000 g/mol), 8,2 mol Wasser und 1 mol H₂SO₄ zugegeben. Zu der so entstandenen klaren Lösung werden 0,5 mol Formaldehyd und 0,5 mol Glyoxylsäure getropft. Nach Erhöhen der Temperatur auf 110 °C wird die Polykondensation über einen Zeitraum von 5 h vervollständigt. Nach Beendigung der Reaktion wird der Reaktionsansatz mit 20 %-iger wässriger NaOH-Lösung auf einen pH von 10,5 gebracht. Nach weiteren 30 min bei 110 °C wird der Ansatz auf Raumtemperatur abgekühlt und der Feststoffgehalt durch Zugabe von Wasser auf ca. 30 Gew.-% eingestellt.
Als Molmasse des so erhaltenen Polykondensationsproduktes wird mit Hilfe der Gelpermeationschromatographie ein Wert von 31.000 g/mol erhalten.

### Beispiel B.8 (Vergleichsbeispiel)

1 mol Phenol und 1 mol Glyoxylsäure werden vorgelegt und bei 80 °C für 1 h gerührt. Anschließend werden 0,5 mol Poly(ethylenoxid)-monophenylether (2000 g/mol), 13,9 mol Wasser und 1,7 mol H₂SO₄ zugegeben. Zu der so entstandenen klaren Lösung werden 0,8 mol Formaldehyd und 0,8 mol Glyoxylsäure getropft. Nach Erhöhen der Temperatur auf 110 °C wird die Polykondensation über einen Zeitraum von 5 h vervollständigt. Nach Beendigung der Reaktion wird der Reaktionsansatz mit 20 %-iger wässriger NaOH-Lösung auf einen pH von 10,5 gebracht. Nach weiteren 30 min bei 110 °C wird der Ansatz auf Raumtemperatur abgekühlt und der Feststoffgehalt durch Zugabe von Wasser auf ca. 30 Gew.-% eingestellt. Als Molmasse des so erhaltenen Polykondensationsproduktes wird mit Hilfe der Gelpermeationschromatographie ein Wert von 22.000 g/mol erhalten.

### Beispiel B.9 (Vergleichsbeispiel)

1,5 mol Phenol, 0,5 mol Anthranilsäure und 2 mol Glyoxylsäure werden vorgelegt und bei 80 °C für 1 h gerührt. Anschließend werden 1 mol Poly (ethylenoxid)-monophenylether (1000 g/mol), 12,2 mol Wasser und 1,5 mol H₂SO₄ zugegeben. Zu der so entstandenen klaren Lösung werden 1,7 mol Formaldehyd und 1,7 mol Glyoxylsäure getropft. Nach Erhöhen der Temperatur auf 110 °C wird die Polykondensation über einen Zeitraum von 5 h vervollständigt. Nach Beendigung der Reaktion wird der Reaktionsansatz mit 20 %-iger wässriger NaOH-Lösung auf einen pH von 10,5 gebracht. Nach weiteren 30 min bei 110 °C wird der Ansatz auf Raumtemperatur abgekühlt und der Feststoffgehalt durch Zugabe von Wasser auf ca. 30 Gew.-% eingestellt.
Als Molmasse des so erhaltenen Polykondensationsproduktes wird mit Hilfe der Gelpermeationschromatographie ein Wert von 20.000 g/mol erhalten.

### Beispiel B.10 (Vergleichsbeispiel)

1 mol Phenol, 1 mol Phenolsulfonsäure und 2 mol Glyoxylsäure werden vorgelegt und bei 80 °C für 1 h gerührt. Anschließend werden 1 mol Poly (ethylenoxid)-monophenylether (1000 g/mol), 12,2 mol Wasser und 1,5 mol H₂SO₄ zugegeben. Zu der so entstandenen klaren Lösung werden 1,7 mol Formaldehyd und 1,7 mol Glyoxylsäure getropft. Nach Erhöhen der Temperatur auf 110 °C wird die Polykondensation über einen Zeitraum von 5 h vervollständigt. Nach Beendigung der Reaktion wird der Reaktionsansatz mit 20 %-iger wässriger NaOH-Lösung auf einen pH von 10,5 gebracht. Nach weiteren 30 min bei 110 °C wird der Ansatz auf Raumtemperatur abgekühlt und der Feststoffgehalt durch Zugabe von Wasser auf ca. 30 Gew.-% eingestellt.
Als Molmasse des so erhaltenen Polykondensationsproduktes wird mit Hilfe der Gelpermeationschromatographie ein Wert von 21.000 g/mol erhalten.

### Beispiel B.11 (Vergleichsbeispiel)

1 mol Poly(ethylenoxid)-monophenylether (1000 g/mol), 4 mol Phenoxyessigsäure, 40,9 mol Wasser und 5 mol H₂SO₄ werden unter Rühren vorgelegt. Zu der so entstandenen Lösung werden 6 mol Formaldehyd in Form einer 37 %-igen wässrigen Lösung zugetropft. Die Polykondensationsreaktion wird bei 105 °C über einen Zeitraum von 5 h vervollständigt. Nach Beendigung der Reaktion wird der Reaktionsansatz mit 20 %-iger wässriger NaOH-Lösung auf einen pH von 10,5 gebracht. Nach weiteren 30 min bei 105 °C wird der Ansatz auf Raumtemperatur abgekühlt und der Feststoffgehalt durch Zugabe von Wasser auf ca. 30 Gew.-% eingestellt.
Als Molmasse des so erhaltenen Polykondensationsproduktes wird mit Hilfe der Gelpermeationschromatographie ein Wert von 23.000 g/mol erhalten.

### Beispiel B.12 (Vergleichsbeispiel)

1 mol Poly(ethylenoxid)-monophenylether (1000 g/mol), 5 mol Phenoxyessigsäure, 49 mol Wasser und 6 mol H₂SO₄ werden unter Rühren vorgelegt. Zu der so entstandenen Lösung werden 8 mol Formaldehyd in Form einer 37 %-igen wässrigen Lösung zugetropft. Die Polykondensationsreaktion wird bei 105 °C über einen Zeitraum von 3 h vervollständigt. Nach Beendigung der Reaktion wird der Reaktionsansatz mit 20 %-iger wässriger NaOH-Lösung auf einen pH von 10,5 gebracht. Nach weiteren 30 min bei 105 °C wird der Ansatz auf Raumtemperatur abgekühlt und der Feststoffgehalt durch Zugabe von Wasser auf ca. 30 Gew.-% eingestellt.
Als Molmasse des so erhaltenen Polykondensationsproduktes wird mit Hilfe der Gelpermeationschromatographie ein Wert von 14.000 g/mol erhalten.

### C. Mörteltests zur Bestimmung des Wasserreduktionsvermögens und Erhaltung der Fließfähigkeit über einen Zeitraum von 90 min

Durchführung der Tests erfolgte gemäß DIN EN 1015-3
Zement: CEM I 42,5 R Karlstadt

**Tabelle 1: Ergebnisse der Mörtelausbreitversuche**

| Rilem Mischer; Zement: Karlstadt; S/Z = 2,2; Normsand = 70 %; Quarzsand = 30% | | | | Ausbreitmaß Mörtel | | | | |
|---|---|---|---|---|---|---|---|---|
| Beispiel | Fließmittel | w/z | Dos. [%] | 0 min [cm] | 30 min [cm] | 60 min [cm] | 90 min [cm] | Δ [cm] |
| C.1 | B.1 | 0,45 | 0,2 | 23,7 | 21,5 | 20,6 | 20,4 | 2,8 |
| C.2 | B.2 | 0,47 | 0,2 | 24 | 22,8 | 22,4 | 22 | 2 |
| C.3 | B.3 | 0,44 | 0,2 | 23,5 | 21,4 | 21,2 | 20,5 | 3 |
| C.4 | B.4 | 0,45 | 0,2 | 23,3 | 21,6 | 20,8 | 20,6 | 2,7 |
| C.5 | B.5 | 0,44 | 0,2 | 24,3 | 23 | 22,6 | 21,6 | 2,7 |
| C.6 | *B.6 | 0,44 | 0,2 | 23,8 | 21,5 | 20,7 | 19,9 | 3,9 |
| C.7 | *B.7 | 0,47 | 0,2 | 24,6 | 22,9 | 22,6 | 21,6 | 3 |
| C.8 | *B.8 | 0,48 | 0,2 | 24,5 | 24,1 | 22 | 21,4 | 3,1 |
| C.9 | *B.9 | 0,46 | 0,2 | 24,2 | 22,1 | 21,3 | 21 | 3,2 |
| C.10 | *B.10 | 0,44 | 0,2 | 24,2 | 21,8 | 20,9 | 20,5 | 3,7 |
| C.11 | *B.11 | 0,48 | 0,2 | 24 | 23,1 | 22,4 | 21,7 | 2,3 |
| C.12 | *B.12 | 0,48 | 0,2 | 23,9 | 22,9 | 22,5 | 22,1 | 1,8 |
| C.13 | ohne Additiv | 0,48 | - | 20 | - | - | - | - |
| C.14 | Melment® L10 | 0,48 | 0,4 | 23,8 | 21,2 | 20 | 18 | 5,8 |
| C.15 | Lomar® D | 0,48 | 0,4 | 24 | 21,6 | 21 | 19,2 | 4,8 |

| | | | | | | | | |
|---|---|---|---|---|---|---|---|---|
| *: Vergleichsbeispiel | | | | | | | | |

Als Referenzsubstanzen dienten das handelsübliche sulfonierte Melamin-Formaldehyd Harz Melment L10®, sowie das handelsübliche sulfonierte Naphthalin-Formaldehyd Harz Lomar® D.

Im Mörtel zeigen die erfindungsgemäßen Polymere eine deutliche Verflüssigungswirkung. Diese wird im Falle der erfindungsgemäßen Polymere bereits bei einer deutlichen niedrigeren Dosierung erreicht, als das bei den handelsüblichen Formaldehyd-Kondensationsharzen der Fall ist. Darüber hinaus wird die Verarbeitbarkeit der Mörtelmischung im Fall der erfindungsgemäßen Polymere im Vergleich zu den handelsüblichen Produkten über einen teilweise deutlich längeren Zeitraum aufrecht erhalten.

### D. Betontests zur Bestimmung des Wasserreduktionsvermögens und Erhaltung der Fließfähigkeit über einen Zeitraum von 90 min

Die Durchführung der Tests erfolgte gemäß DIN EN 206-1, DIN EN 12350-2 und DIN EN 12350-5.
Zement: CEM I 52,5 R Bernburger, Temperatur 20 °C. Die Ergebnisse sind in Tabelle 2 zusammengefasst.

**Tabelle 2: Ergebnisse der Betontests; D-1 - D-8, D-10 - D-12: Dos. 0,24 % bezogen auf Feststoff; D-9: Dos. 0,18 % bezogen auf Feststoff; D-13, D-14: Dos. 0,40 % bezogen auf Feststoff**

| Beispiel | Fließmittel | w/z | Slump in cm | | | | Slump-Flow in cm | | | | Ausbreitmaß in cm | | | |
|---|---|---|---|---|---|---|---|---|---|---|---|---|---|---|
| | | | 0 | 10 | 40 | 60 | 0 | 10 | 40 | 60 | 0 | 10 | 40 | 60 |
| D.1 | B.1 | 0,45 | 20,5 | 18,5 | 9 | - | 33 | 28 | 20 | - | 57 | 52 | 41 | - |
| D.2 | B.2 | 0,47 | 21 | 18 | 7,5 | - | 35 | 29 | 21 | - | 58 | 53 | 43 | - |
| D.3 | B.3 | 0,44 | 20,5 | 17,5 | 8,5 | - | 34 | 27 | 20 | - | 57 | 50 | 39 | - |
| D.4 | B.4 | 0,45 | 20 | 16,5 | 6,5 | - | 34 | 27 | 20 | - | 56 | 48 | 40 | - |
| D.5 | B.5 | 0,44 | 21 | 18 | 9 | - | 36 | 29 | 22 | - | 58 | 51 | 44 | - |
| D.6 | *B.6 | 0,45 | 20 | 15,5 | 6,5 | - | 33 | 27 | 20 | - | 53 | 48 | 39 | - |
| D.7 | *B.7 | 0,47 | 21 | 17 | 8 | - | 35 | 28 | 22 | - | 54 | 47 | 40 | - |
| D.8 | *B.8 | 0,48 | 21 | 20 | 12 | 8 | 35 | 27 | 21 | - | 56 | 50 | 41 | - |
| D.9 | *B.9 | 0,46 | 21,5 | 19,5 | 8,5 | - | 36 | 29 | 21 | - | 56 | 51 | 45 | - |
| D.10 | *B.10 | 0,44 | 21 | 17,5 | 5 | - | 31 | 26 | 20 | - | 51 | 47 | 41 | - |
| D.11 | *B.11 | 0,48 | 19,5 | 19 | 14 | 10 | 33,5 | 31 | 27 | 21 | 59 | 55 | 49 | 46 |
| D.12 | *B.12 | 0,48 | 19 | 19 | 16 | 10 | 33 | 30 | 27 | 20 | 58 | 53 | 48 | 46 |
| D.13 | Melment ®L10 | 0,48 | 22,5 | 17,5 | 6 | - | 39 | 28 | 20 | - | 58 | 51 | 40 | - |
| D.14 | Lomar® D | 0,48 | 23 | 18 | 7 | - | 39 | 29 | 21 | - | 59 | 53 | 42 | - |

| | | | | | | | | | | | | | | |
|---|---|---|---|---|---|---|---|---|---|---|---|---|---|---|
| *: Vergleichsbeispiel | | | | | | | | | | | | | | |

Bei dieser Testserie wurde das Wasser-Zementverhältnis so gewählt, dass für alle Proben nach Beendigung des Mischvorgangs ein einheitlicher Slump-Wert von ca. 20 cm erreicht wurde. Auch hier dienten das handelsübliche sulfonierte Melamin-Formaldehyd Harz Melment L10®, sowie das handelsübliche sulfonierte Naphthalin-Formaldehyd Harz Lomar® D als Referenzsubstanzen.

Wie schon im Mörtel, so zeigen die erfindungsgemäßen Polykondensationsprodukte auch im Beton eine deutliche Verflüssigungswirkung. Diese wird im Falle der erfindungsgemäßen Polykondensationsprodukten bereits bei einer deutlichen niedrigeren Dosierung erreicht, als das bei den handelsüblichen Formaldehyd-Kondensationsharzen der Fall ist. Darüber hinaus wird die Verarbeitbarkeit der Betonmischung im Fall der erfindungsgemäßen Polymere im Vergleich zu den handelsüblichen Produkten teilweise über einen deutlich längeren Zeitraum aufrecht erhalten.

## Patentansprüche

1. Polykondensationsprodukt bestehend aus
A) einer aromatischen oder heteroaromatischen Verbindung mit 5 bis 10 C-Atomen bzw. Heteroatomen, wobei diese Verbindung im Durchschnitt 2 bis 280 Oxyethylen- und/oder Oxypropylen-Gruppen pro Molekül besitzt, die über ein O- oder N-Atom mit der aromatischen oder heteroaromatischen Verbindung verknüpft sind und
B) mindestens einer aromatischen Verbindung ausgewählt aus der Gruppe Phenolether, Naphthole, Naphtholether, Aniline, Furfurylalkohole und/oder eines Aminoplastbildners ausgewählt aus Carbonsäureamiden
und
C) Formaldehyd,
wobei die Komponente A) noch weitere Substituenten ausgewählt aus der Gruppe OH, OR¹, NH₂, NHR¹, NR¹₂, C₁-C₁₀-Alkyl, PO₃H₂, OPO₃H₂ aufweisen kann, wobei die C₁-C₁₀-Alkylreste wiederum Phenyl- oder 4-Hydroxyphenyl-Reste besitzen können und R¹ einen C₁-C₄-Rest bedeutet,
und wobei die aromatische Verbindung B) Substituenten ausgewählt aus der Gruppe OH, NH₂, OR², NHR², NR²R², C₁-C₄-Alkyl, PO₃H₂, OPO₃H₂ aufweisen kann, wobei die Alkylreste wiederum Phenyl- oder 4-Hydroxyphenylreste besitzen können und R² einen C₁-C₄-Alkylrest bedeutet, der seinerseits einen Substituenten, ausgewählt aus der Gruppe OH, PO₃H₂, OPO₃H₂ aufweisen kann.

2. Polykondensationsprodukt nach Anspruch 1, **dadurch gekennzeichnet, dass** die Komponente A) aus einem Phenol-, Naphthol-, Anilin- oder Furfurylalkohol-Derivat besteht.

3. Polykondensationsprodukt nach Anspruch 1 oder 2, **dadurch gekennzeichnet, dass** sich die Komponente A) ableitet von einer Verbindung ausgewählt aus der Gruppe Phenol, Kresol, Resorcinol, Nonylphenol, Methoxyphenol, Naphthol, Methylnaphthol, Butylnaphthol, Bisphenol A, Anilin, Methylanilin, Hydroxyanilin, Methoxyanilin, Furfurylalkohol und Salicylsäure.

4. Polykondensationsprodukt nach einem der Ansprüche 1 bis 3, **dadurch gekennzeichnet, dass** die Komponente B) eine Verbindung ausgewählt aus der Gruppe Phenoxyethanol, Phenoxyethanolphosphat, Methoxyphenol, Anilin, Methylanilin, Bernsteinsäuremonoamid, Furfurylalkohol darstellt.

5. Polykondensationsprodukt nach einem der Ansprüche 1 bis 4, **dadurch gekennzeichnet, dass** das Molverhältnis von Komponente C) : A) + B) 1 : 0,01 bis 10 beträgt.

6. Polykondensationsprodukt nach einem der Ansprüche 1-5, **dadurch gekennzeichnet, dass** das Molverhältnis von Komponente C) : A) + B) 1 : 0,1 bis 8 beträgt.

7. Polykondensationsprodukt nach einem der Ansprüche 1 bis 6, **dadurch gekennzeichnet, dass** das Molverhältnis der Komponenten A) : B) 10 : 1 bis 1 : 10 beträgt.

8. Verfahren zur Herstellung des Kondensationsproduktes nach einem der Ansprüche 1 bis 7, **dadurch gekennzeichnet, dass** man die Komponenten A), B) und C) in wässriger Lösung in Gegenwart eines dehydratisierend wirkenden Katalysators bei einer Temperatur von 20 bis 140 °C und einem Druck von 1 bis 10 bar kondensiert.

9. Verfahren nach Anspruch 8, **dadurch gekennzeichnet, dass** man
a) die Komponente B) und eine wässrige Lösung der Aldehyd-Komponente C) bei einer Temperatur von 20 bis 95 °C vorkondensiert
und
b) dann die Komponente A) sowie eine wässrige Lösung der Aldehyd-Komponente C) zugibt und in Gegenwart des Katalysators bei einer Temperatur von 20 bis 140 °C fertigkondensiert.

10. Verfahren nach Anspruch 8 oder 9, **dadurch gekennzeichnet, dass** man als dehydratisierend wirkenden Katalysator Schwefelsäure einsetzt.

11. Verfahren nach einem der Ansprüche 8 bis 10, **dadurch gekennzeichnet, dass** man das Reaktionsgemisch nach Abschluss der Kondensationsreaktion noch einer thermischen Nachbehandlung bei einem pH-Wert von 8,0 bis 13,0 und einer Temperatur von 60 bis 120 °C unterwirft.

12. Verfahren nach einem der Ansprüche 8 bis 11, **dadurch gekennzeichnet, dass** man das während der Neutralisation gebildete Natriumsulfat abtrennt.

13. Verfahren nach Anspruch 12, **dadurch gekennzeichnet, dass** man die Reaktionslösung zur Ausfällung des Polykondensationsproduktes auf einen pH-Wert von 1,0 bis 4,0 einstellt, die wässrige Salz-Lösung abtrennt und das salzfreie Polykondensationsprodukt in einer solchen Menge Wasser löst, dass der gewünschte Feststoff-Gehalt eingestellt wird.

14. Verwendung des Kondensationsproduktes nach einem der Ansprüche 1 bis 7 als Zusatzmittel für wässrige Suspensionen von anorganischen Bindemitteln.

15. Verwendung nach Anspruch 14, **dadurch gekennzeichnet, dass** das Kondensationsprodukt in einer Menge von 0,01 bis 10 Gew.-%, bezogen auf das Gewicht des anorganischen Bindemittels, eingesetzt wird.

## Claims

1. A polycondensation product consisting of
A) an aromatic or heteroaromatic compound which has from 5 to 10 carbon atoms or heteroatoms and contains, on average, from 2 to 280 oxyethylene and/or oxypropylene groups which are bound via an O or N atom to the aromatic or heteroaromatic compound per molecule
and
B) at least one aromatic compound selected from the group consisting of phenol ethers, naphthols, naphthol ethers, anilines, furfuryl alcohols and/or an aminoplastic former selected from carboxamides
and
C) formaldehyde,
where the component A) may have further substituents selected from the group consisting of OH, OR¹, NH₂, NHR¹, NR¹₂, C₁-C₁₀-alkyl, PO₃H₂, OPO₃H₂, where the C₁-C₁₀-alkyl radicals may in turn bear phenyl or 4-hydroxyphenyl radicals and R¹ is a C₁-C₄ radical,
and where the aromatic compound B) may have substituents selected from the group consisting of OH, NH₂, OR², NHR², NR²R², C₁-C₄-alkyl, PO₃H₂, OPO₃H₂, where the alkyl radicals may in turn bear phenyl or 4-hydroxyphenyl radicals and R² is a C₁-C₄-alkyl radical which may in turn bear a substituent selected from the group consisting of OH, PO₃H₂, OPO₃H₂.

2. The polycondensation product according to claim 1, wherein the component A) consists of a phenol, naphthol, aniline or furfuryl alcohol derivative.

3. The polycondensation product according to claim 1 or 2, wherein the component A) is derived from a compound selected from the group consisting of phenol, cresol, resorcinol, nonylphenol, methoxyphenol, naphthol, methylnaphthol, butylnaphthol, bisphenol A, aniline, methylaniline, hydroxyaniline, methoxyaniline, furfuryl alcohol and salicylic acid.

4. The polycondensation product according to any of claims 1 to 3, wherein the component B) is a compound selected from the group consisting of phenoxyethanol, phenoxyethanol phosphate, methoxyphenol, aniline, methylaniline, succinic monoamide, furfuryl alcohol.

5. The polycondensation product according to any of claims 1 to 4, wherein the molar ratio of component C):A)+B) if 1:0.01-10.

6. The polycondensation product according to any of claims 1-5, wherein the molar ratio of component C):A)+B) is 1:0.1 to 8.

7. The polycondensation product according to any of claims 1 to 6, wherein the molar ratio of the components A):B) is from 10:1 to 1:10.

8. A process for preparing the condensation product according to any of claims 1 to 7, wherein the components A), B) and C) are condensed in aqueous solution in the presence of a dehydrating catalyst at a temperature of from 20 to 140°C and a pressure of from 1 to 10 bar.

9. The process according to claim 8, wherein
a) the component B) and an aqueous solution of the aldehyde component C) are precondensed at a temperature of from 20 to 95°C
and
b) the component A) and an aqueous solution of the aldehyde component C) are then added and the condensation is completed in the presence of the catalyst at a temperature of from 20 to 140°C.

10. The process according to claim 8 or 9, wherein sulphuric acid is used as dehydrating catalyst.

11. The process according to any of claims 8 to 10, wherein the reaction mixture after end of the condensation reaction is subjected to a thermal after-treatment at a pH of from 8.0 to 13.0 and a temperature of from 60 to 120°C.

12. The process according to any of claims 8 to 11, wherein sodium sulphate formed during neutralization is separated off.

13. The process according to claim 12, wherein the reaction solution is brought to a pH of from 1.0 to 4.0, to precipitate the polycondensation product, the aqueous salt solution is separated off and the salt-free polycondensation product is dissolved in such an amount of water that the desired solids content is obtained.

14. The use of the condensation product according to any of claims 1 to 7 as additive for aqueous suspensions of inorganic binders.

15. The use according to claim 14, wherein the condensation product is used in an amount of from 0.01 to 10% by weight, based on the weight of the inorganic binder.

## Revendications

1. Produit de polycondensation constitué par :
A) un composé aromatique ou hétéroaromatique de 5 à 10 atomes C ou hétéroatomes, ce composé comprenant en moyenne 2 à 280 groupes oxyéthylène et/ou oxypropylène par molécule, qui sont reliés par un atome O ou N avec le composé aromatique ou hétéroaromatique,
et
B) au moins un composé aromatique choisi dans le groupe constitué par les éthers de phénol, les naphtols, les éthers de naphtol, les anilines, les alcools furfurylique et/ou un agent formant des aminoplastes choisi parmi les amides d'acides carboxyliques,
et
C) du formaldéhyde,
le composant A) pouvant encore comprendre des substituants supplémentaires choisis dans le groupe constitué par OH, OR¹, NH₂, NHR¹, NR¹₂, alkyle en C₁-C₁₀, PO₃H₂, OPO₃H₂, les radicaux alkyle en C₁-C₁₀ pouvant à leur tour comprendre des radicaux phényle ou 4-hydroxyphényle, et R¹ signifiant un radical en C₁-C₄,
et le composé aromatique B) pouvant comprendre des substituants choisis dans le groupe constitué par OH, NH₂, OR², NHR², NR²R², alkyle en C₁-C₄, PO₃H₂, OPO₃H₂, les radicaux alkyle pouvant à leur tour comprendre des radicaux phényle ou 4-hydroxyphényle, et R² signifiant un radical en C₁-C₄, qui peut de son côté comprendre un substituant choisi dans le groupe constitué par OH, PO₃H₂, OPO₃H₂.

2. Produit de polycondensation selon la revendication 1, **caractérisé en ce que** le composant A) est constitué par un dérivé de phénol, de naphtol, d'aniline ou d'alcool furfurylique.

3. Produit de polycondensation selon la revendication 1 ou 2, **caractérisé en ce que** le composant A) dérive d'un composé choisi dans le groupe constitué par le phénol, le crésol, le résorcinol, le nonylphénol, le méthoxyphénol, le naphtol, le méthylnaphtol, le butylnaphtol, le bisphénol A, l'aniline, la méthylaniline, l'hydroxyaniline, la méthoxyaniline, l'alcool furfurylique et l'acide salicylique.

4. Produit de polycondensation selon l'une quelconque des revendications 1 à 3, **caractérisé en ce que** le composant B) est un composé choisi dans le groupe constitué par le phénoxyéthanol, le phosphate de phénoxyéthanol, le méthoxyphénol, l'aniline, la méthylaniline, le monoamide de l'acide succinique, l'alcool furfurylique.

5. Produit de polycondensation selon l'une quelconque des revendications 1 à 4, **caractérisé en ce que** le rapport molaire entre les composants C):A)+B) est de 1:0,01 à 10.

6. Produit de polycondensation selon l'une quelconque des revendications 1 à 5, **caractérisé en ce que** le rapport molaire entre les composants C):A)+B) est de 1:0,1 à 8.

7. Produit de polycondensation selon l'une quelconque des revendications 1 à 6, **caractérisé en ce que** le rapport molaire entre les composants A) :B) est de 10:1 à 1:10.

8. Procédé de fabrication du produit de polycondensation selon l'une quelconque des revendications 1 à 7, **caractérisé en ce que** les composants A), B) et C) sont condensés dans une solution aqueuse en présence d'un catalyseur à effet déshydratant à une température de 20 à 140 °C et à une pression de 1 à 10 bar.

9. Procédé selon la revendication 8, **caractérisé en ce que**
a) le composant B) et une solution aqueuse du composant aldéhyde C) sont pré-condensés à une température de 20 à 95 °C,
puis
b) le composant A) et une solution aqueuse du composant aldéhyde C) sont ajoutés et condensés en présence du catalyseur à une température de 20 à 140 °C.

10. Procédé selon la revendication 8 ou 9, **caractérisé en ce que** de l'acide sulfurique est utilisé en tant que catalyseur à effet déshydratant.

11. Procédé selon l'une quelconque des revendications 8 à 10, **caractérisé en ce que** le mélange réactionnel est encore soumis à un post-traitement thermique à un pH de 8,0 à 13,0 et à une température de 60 à 120 °C après la fin de la réaction de condensation.

12. Procédé selon l'une quelconque des revendications 8 à 11, **caractérisé en ce que** le sulfate de sodium formé pendant la neutralisation est séparé.

13. Procédé selon la revendication 12, **caractérisé en ce que** la solution réactionnelle est ajustée à un pH de 1,0 à 4,0 pour la précipitation du produit de polycondensation, la solution aqueuse de sels est séparée et le produit de polycondensation exempt de sels est dissous dans une quantité d'eau telle que la teneur en solides souhaitée soit ajustée.

14. Utilisation du produit de condensation selon l'une quelconque des revendications 1 à 7 en tant qu'additif pour suspensions aqueuses de liants inorganiques.

15. Utilisation selon la revendication 14, **caractérisée en ce que** le produit de condensation est utilisé en une quantité de 0,01 à 10 % en poids, par rapport au poids du liant inorganique.
